# EUROPEAN PATENT APPLICATION

(11) **EP 4 366 442 A1**
(43) Date of publication of application: **08.05.2024**
(21) Application number: 23206451.9
(22) Date of filing: 27.10.2023
(51) Int. Cl.: H04W 74/0833

(54) **RANDOM ACCESS RESPONSES WITH BANDWIDTH LIMITATION**

(30) Priority: 07.11.2022 GB 202216563
(71) Applicant: Nokia Technologies Oy, 02610 Espoo (FI)
(72) Inventor: KHLASS, Ahlem, Massy (FR); TURTINEN, Samuli Heikki, Ii (FI); KOSKINEN, Jussi-Pekka, Oulu (FI)
(74) Representative: Nokia EPO representatives

(57) **Abstract**

An apparatus includes: at least one processor; and at least one memory storing instructions that, when executed by the at least one processor, cause the apparatus at least to: transmit, to a network node, a random access preamble during a random access procedure; and receive, from the network node, a message including an indication, wherein the indication indicates one of: one random access response that accommodates a bandwidth limitation of the terminal device, wherein the bandwidth limitation of the terminal device is within a wider system bandwidth, or multiple random access responses comprising a first random access response that does not accommodate the bandwidth limitation of the terminal device, and a second random access response that accommodates the bandwidth limitation of the terminal device.

## Description

### TECHNICAL FIELD

The examples and non-limiting example embodiments relate generally to communications and, more particularly, to multiple random access responses.

### BACKGROUND

It is known for a base station to transmit downlink control information to a user equipment in a communication network. Currently, there is no means at the gNB to identify whether the UE is a RedCap UE or not and whether there is limitation on the supported bandwidth, i.e. 5 Mhz (for R18 Redcap UEs) or 20 Mhz (for R17 Redcap UEs). So, the R18 Redcap UEs may receive a PDCCH scheduling a RAR PDSCH that cannot be decoded as it exceeds its supported BW of 5 Mhz and/or maximum number of PRBs.

### SUMMARY

In accordance with an aspect, an apparatus (e.g., a network node) includes at least one processor; and at least one memory storing instructions that, when executed by the at least one processor, cause the apparatus at least to: receive, from a terminal device, a random access preamble during a random access procedure; and transmit, to the terminal device, a message (e.g. carried over a physical downlink control channel during the random access procedure) including an indication, wherein the indication indicates one of: one random access response that accommodates a bandwidth limitation of the terminal device, wherein the bandwidth limitation of the terminal device being within a wider system bandwidth, or multiple random access responses including a first random access response that does not accommodate the bandwidth limitation of the terminal device, and a second random access response that accommodates the bandwidth limitation of the terminal device.

In accordance with an aspect, an apparatus (e.g., a terminal device) includes at least one processor; and at least one memory storing instructions that, when executed by the at least one processor, cause the apparatus at least to: transmit, to a network node, a random access preamble during a random access procedure; and receive, from the network node, a message (e.g. carried over a physical downlink control channel during the random access procedure) including an indication, wherein the indication indicates one of: one random access response that accommodates a bandwidth limitation of a terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device.

In accordance with an aspect, a method performed by a network node, includes receiving, from a terminal device, a random access preamble during a random access procedure; and transmitting, to the terminal device, a message (e.g. carried over a physical downlink control channel during the random access procedure) including an indication, wherein the indication indicates one of: one random access response that accommodates a bandwidth limitation of the terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device.

In accordance with an aspect, a method performed by a terminal device, includes transmitting, to a network node, a random access preamble during a random access procedure; and receiving, from the network node, a message (e.g. carried over a physical downlink control channel during the random access procedure) including an indication, wherein the indication indicates one of: one random access response that accommodates a bandwidth limitation of a terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device.

In accordance with an aspect, an apparatus (e.g., a network node) includes means for receiving, from a terminal device, a random access preamble during a random access procedure; and means for transmitting, to the terminal device, a message (e.g. carried over a physical downlink control channel during the random access procedure) including an indication, wherein the indication indicates one of: one random access response that accommodates a bandwidth limitation of the terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device.

In accordance with an aspect, an apparatus (e.g., a terminal device) includes means for transmitting, to a network node, a random access preamble during a random access procedure; and means for receiving, from the network node a message (e.g. carried over a physical downlink control channel during the random access procedure) including an indication, wherein the indication indicates one of: one random access response that accommodates a bandwidth limitation of a terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device.

In accordance with an aspect, a non-transitory program storage device readable by a machine (e.g., a network node), tangibly embodying a program of instructions executable with the machine for performing operations is provided, the operations including: receiving, from a terminal device, a random access preamble during a random access procedure; and transmitting, to the terminal device, a message (e.g. carried over a physical downlink control channel during the random access procedure) including an indication, wherein the indication indicates one of: one random access response that accommodates a bandwidth limitation of the terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device.

In accordance with an aspect, a non-transitory program storage device readable by a machine (e.g., a terminal device), tangibly embodying a program of instructions executable with the machine for performing operations is provided, the operations including: transmitting, to a network node, a random access preamble during a random access procedure; and receiving, from the network node, a message (e.g. carried over a physical downlink control channel during the random access procedure) including an indication, wherein the indication indicates one of: one random access response that accommodates a bandwidth limitation of a terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device.

### BRIEF DESCRIPTION OF THE DRAWINGS

The foregoing aspects and other features are explained in the following description, taken in connection with the accompanying drawings.
FIG. 1 is a block diagram of one possible and non-limiting system in which the example embodiments may be practiced.
FIG. 2A depicts different interpretation of PDSCH RAR resources based on a Indication included in the PDCCH .
FIG. 2B depicts different PDSCH RAR resources allocations provided by the same PDCCH.
FIG. 2C depicts supplementary RAR scheduling addressed to the same RA-RNTI.
FIG. 3A is a signaling diagram with a single PDCCH scheduling one or multiple PDSCH RARs.
FIG. 3B is a signaling diagram with multiple RARs where the first PDCCH indicates the presence of secondary RARs.
FIG. 4 is an example apparatus configured to implement the examples described herein.
FIG. 5 shows a representation of an example of non-volatile memory media.
FIG. 6 is an example method implementing the examples described herein, performed with a network node.
FIG. 7 is an example method implementing the examples described herein, performed with a terminal device.

### DETAILED DESCRIPTION OF EXAMPLE EMBODIMENTS

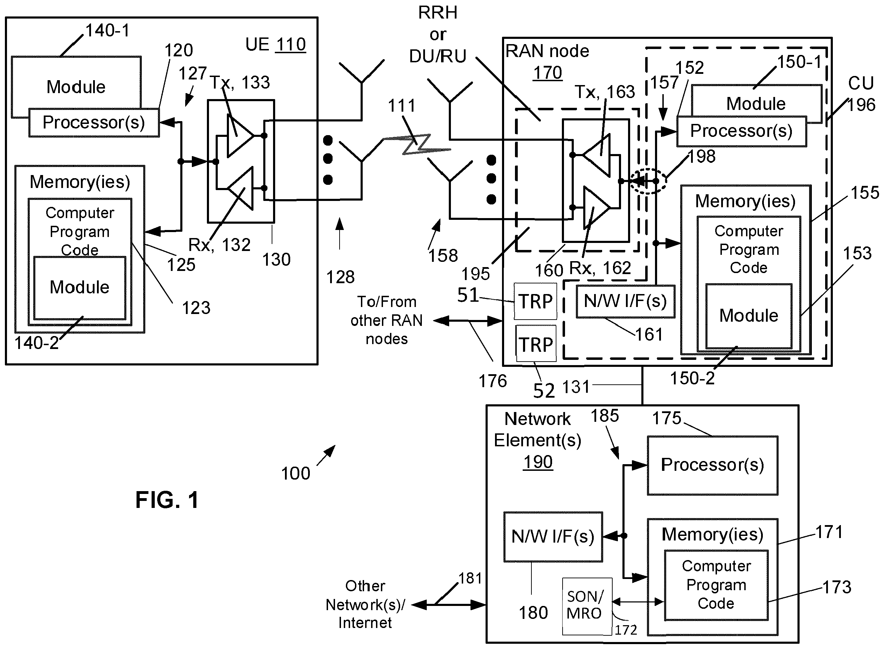

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that may access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, including one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access for wireless devices such as the UE 110 to the wireless network 100. The RAN node 170 may be, for example, a base station for 5G, also called New Radio (NR). In 5G, the RAN node 170 may be a NG-RAN node, which is defined as either a gNB or an ng-eNB. A gNB is a node providing NR user plane and control plane protocol terminations towards the UE, and connected via the NG interface (such as connection 131) to a 5GC (such as, for example, the network element(s) 190). The ng-eNB is a node providing E-UTRA user plane and control plane protocol terminations towards the UE, and connected via the NG interface (such as connection 131) to the 5GC. The NG-RAN node may include multiple gNBs, which may also include a central unit (CU) (gNB-CU) 196 and distributed unit(s) (DUs) (gNB-DUs), of which DU 195 is shown. Note that the DU 195 may include or be coupled to and control a radio unit (RU). The gNB-CU 196 is a logical node hosting radio resource control (RRC), SDAP and PDCP protocols of the gNB or RRC and PDCP protocols of the en-gNB that control the operation of one or more gNB-DUs. The gNB-CU 196 terminates the F1 interface connected with the gNB-DU 195. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU 195 is a logical node hosting RLC, MAC and PHY layers of the gNB or en-gNB, and its operation is partly controlled by gNB-CU 196. One gNB-CU 196 supports one or multiple cells. One cell may be supported with one gNB-DU 195, or one cell may be supported/shared with multiple DUs under RAN sharing. The gNB-DU 195 terminates the F1 interface 198 connected with the gNB-CU 196. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memory(ies) 155, and network interfaces 161. Note that the DU 195 may also contain its own memory/memories and processor(s), and/or other hardware, but these are not shown.

The RAN node 170 includes a module 150, including one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU 195, and the one or more buses 157 could be implemented in part as, for example, fiber optic cable or other suitable network connection to connect the other elements (e.g., a central unit (CU), gNB-CU 196) of the RAN node 170 to the RRH/DU 195. Reference 198 also indicates those suitable network link(s).

A RAN node / gNB may include one or more TRPs to which the methods described herein may be applied. FIG. 1 shows that the RAN node 170 includes two TRPs, TRP 51 and TRP 52. The RAN node 170 may host or include other TRPs not shown in FIG. 1.

A relay node in NR is called an integrated access and backhaul node. A mobile termination part of the IAB node facilitates the backhaul (parent link) connection. In other words, it is the functionality which carries UE functionalities. The distributed unit part of the IAB node facilitates the so called access link (child link) connections (i.e. for access link UEs, and backhaul for other IAB nodes, in the case of multi-hop IAB). In other words, it is responsible for certain base station functionalities. The IAB scenario may follow the so called split architecture, where the central unit hosts the higher layer protocols to the UE and terminates the control plane and user plane interfaces to the 5G core network.

It is noted that the description herein indicates that "cells" perform functions, but it should be clear that equipment which forms the cell may perform the functions. The cell makes up part of a base station. That is, there may be multiple cells per base station. For example, there could be three cells for a single carrier frequency and associated bandwidth, each cell covering one-third of a 360 degree area so that the single base station's coverage area covers an approximate oval or circle. Furthermore, each cell may correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include location management functions (LMF(s)) and/or access and mobility management function(s) (AMF(S)) and/or user plane functions (UPF(s)) and/or session management function(s) (SMF(s)). Such core network functionality for LTE may include MME (Mobility Management Entity)/SGW (Serving Gateway) functionality. Such core network functionality may include SON (self-organizing/optimizing network) functionality. These are merely example functions that may be supported by the network element(s) 190, and note that both 5G and LTE functions might be supported. The RAN node 170 is coupled via a link 131 to the network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. Computer program code 173 may include SON and/or MRO functionality 172.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, non-transitory memory, transitory memory, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, network element(s) 190, and other functions as described herein.

In general, the various example embodiments of the user equipment 110 may include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, head mounted displays such as those that implement virtual/augmented/mixed reality, as well as portable units or terminals that incorporate combinations of such functions. The UE 110 may also be a vehicle such as a car, or a UE mounted in a vehicle, a UAV such as e.g. a drone, or a UE mounted in a UAV.

UE 110, RAN node 170, and/or network element(s) 190, (and associated memories, computer program code and modules) may be configured to implement (e.g. in part) the methods described herein, including multiple random access responses. Thus, computer program code 123, module 140-1, module 140-2, and other elements/features shown in FIG. 1 of UE 110 may implement user equipment related aspects of the examples described herein. Similarly, computer program code 153, module 150-1, module 150-2, and other elements/features shown in FIG. 1 of RAN node 170 may implement gNB/TRP related aspects of the examples described herein. Computer program code 173 and other elements/features shown in FIG. 1 of network element(s) 190 may be configured to implement network element related aspects of the examples described herein.

Having thus introduced a suitable but non-limiting technical context for the practice of the example embodiments, the example embodiments are now described with greater specificity.

In order to support the options for Redcap UE bandwidth reduction discussed in Release 18, the early UE identification using MSG1/MSGA may be needed, even if not supported by the gNB, and further distinction between R18 Redcap UEs and R17 Redcap UEs may also be needed.

But currently, if this early UE identification using MSG1/MSGA is not supported, there is no means at the gNB to identify whether the UE is a RedCap UE or not and whether there is limitation on the supported BW, i.e. 5 Mhz (for R18 Redcap UEs) or 20 Mhz (for R17 Redcap UEs).

So, the R18 Redcap UEs may receive a PDCCH scheduling a RAR PDSCH that cannot be decoded as it exceeds its supported BW of 5 Mhz and/or maximum number of PRBs.

An option is for multiple UL grants to be used by the UE for MSG3 transmission within the same RAR message. However this does not relate to provisioning UEs with different capabilities about multiple RAR messages.

Described herein is a method where, in response to a random access preamble reception, the gNB may generate multiple RARs (and hence PDSCH allocations) that are associated to the same PDCCH (DCI).

The PDCCH (DCI) that corresponds to multiple RARs may provide an indication that leads R18 Redcap UEs to decode it differently that may accommodate their 5 MHz BW limitation. However, if the indicator is not provided, then the PDCCH may be interpreted as normally and only one RAR may be associated with this PDCCH - for instance, NW ensures in this case that the PDSCH/Msg3 PUSCH are provided within the 5MHz BW supported by the R18 RedCap UEs.

In one example, the indication may be optionally set and be in a form of extra bits that provide the resource assignment for RAR PDSCH that accommodate the 5 MHz BW limitation.

In one example, the indication may be implicit based on the PDSCH allocation of the (first "legacy") RAR exceeding the 5MHz BW / BW monitored by the RedCap R18 UE. Based on such allocation, RedCap R18 UE may determine the need to decode further bits in the DCI scheduling the RARs or interpret the PDSCH resource allocation for the (second) RAR differently.

With the additional indication provided by the network in the PDCCH (DCI) scheduling the RAR, the R18 RedCap UEs may have a different interpretation as compared to R17 RedCap/other UEs.

In one example, R18 RedCap UEs may decode a different resource assignment for a RAR PDSCH that may accommodate their 5 MHz BW limitation.

In one example, the PDCCH (DCI) scheduling the RAR corresponding to the RO (RACH occasion) RedCap R18 UE used for its preamble transmission may indicate that another RAR will be scheduled for narrower BW. R18 RedCap UE may hence ignore the first RAR and attempt to decode a second RAR addressed to the same RA-RNTI with reduced BW. Additionally/alternatively, the PDCCH/DCI scheduling the RAR corresponding to narrower BW may include indication that this RAR may be applicable to 5Mhz capability. I. e., in one example, the applicability for 5MHz BW capability in the PDCCH/DCI scheduling the RAR may serve as an indication whether further RAR should be expected to be scheduled.

In one example, if the NW provides RedCap specific RACH resources but not R18 RedCap specific RACH resources, the R18 RedCap UE uses the RedCap specific RACH resources and applies the above behavior for the PDCCH/DCI scheduling the RAR.

In one example, multiple RARs may be two RARs, however, the mechanisms are not limited to two but may be also more.

In one example, the network indicates with dedicated signaling (e.g. RRC Release message) and/or broadcast signaling (system information) how certain UEs (e.g. a 5MHz UE) are to interpret the PDCCH that schedules RAR (i.e. DCI format 1_0 with CRC scrambled by RA-RNTI). For example, one or more of the following information may be interpreted differently: frequency domain resource assignment, time domain resource assignment, VRB to PRB mapping, modulation and coding scheme, TB scaling.

Described herein are examples of the indication included in the PDCCH that allows R18 redcap UEs to interpret the PDSCH RAR differently (as compared to the legacy procedure).

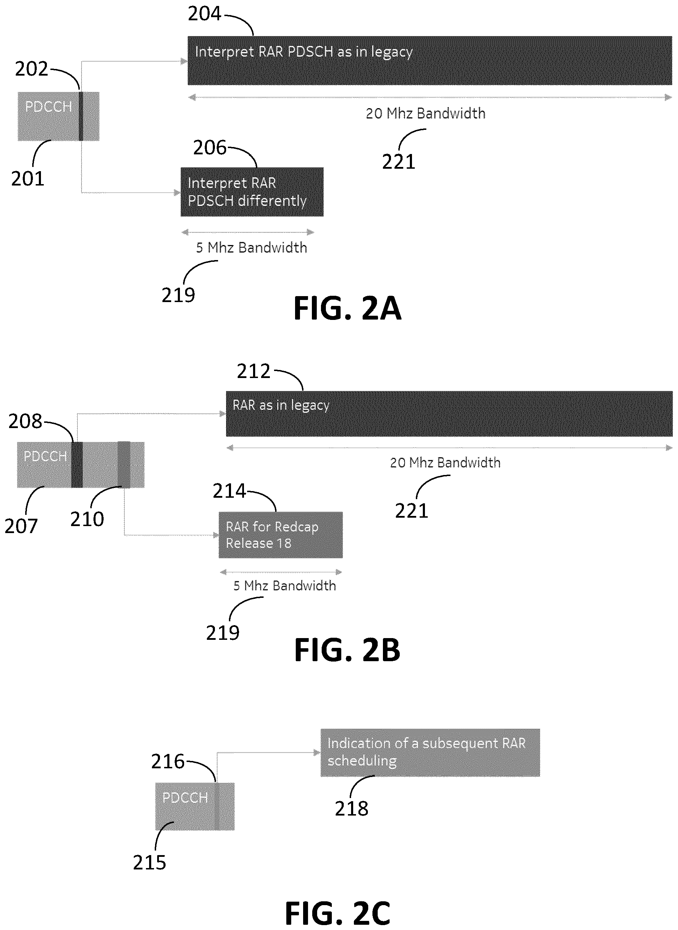

FIG. 2A, FIG. 2B, and FIG. 2C are illustrative examples of indication through PDCCH of the presence of one or more RARs.

FIG. 2A shows a different interpretation of the PDSCH RAR resources based on the indication included in the PDCCH . Based on the indication within the PDCCH 201, the UE will either interpret the RAR PDSCH (202) as in the legacy procedure (204) as having a normal bandwidth 221 such as 20 Mhz, or interpret the RAR PDSCH differently (206) as having a bandwidth that accommodates a bandwidth limitation 219 of the UE, such as a 5Mhz bandwidth.

FIG. 2B shows different PDSCH RAR resources allocations provided by the same PDCCH 207. The first RAR resource allocation 208 may be a legacy RAR 212 associated with and accommodating at least a 20 Mhz bandwidth 221. The second RAR resource allocation 210 may be a RAR for Redcap release 18 (214), associated with and accommodating for example around 5 Mhz bandwidth 219.

FIG. 2C shows supplementary RAR scheduling addressed to the same RA-RNTI. In particular, an indication 216 may be given within the PDCCH 215 that there is to be subsequent RAR resource scheduling (218).

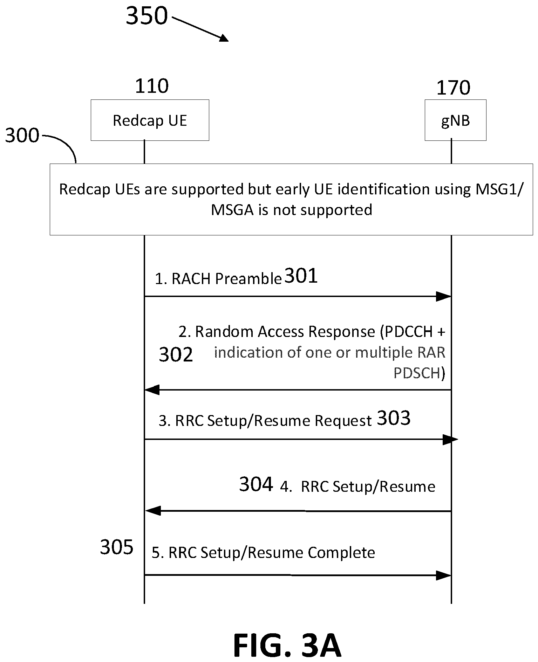

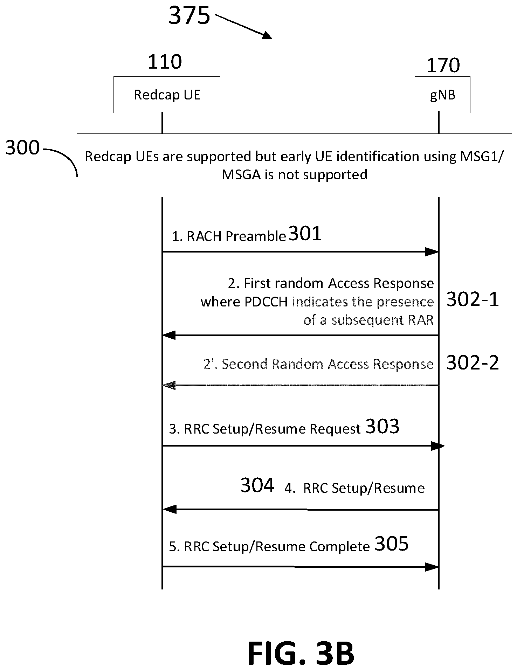

FIG. 3A and FIG. 3B illustrate 4-step RA procedures where one or more RARs are scheduled based on the indication included in the PDCCH . In particular, the signaling flow may be provided in FIG. 3A and FIG. 3B for a 4-step based RA procedure. Novel aspects of the signaling diagrams of FIG. 3A and FIG. 3B include the "indication of one or multiple RAR PDSCH" shown at 302 in FIG. 3A, the "indicates the presence of a subsequent RAR" at 302-1 of FIG. 3B, and the "second random access response" at 302-2 of FIG. 3B.

FIG. 3A is a signaling diagram 350 showing a single PDCCH scheduling one or multiple PDSCH RARs. At 300, related to the redcap UE 110 and the gNB 170, Redcap UEs are supported but early UE identification using MSG1 / MSGA is not supported. At 301, the UE 110 transmits a RACH preamble to the gNB 170. At 302, the gNB 170 transmits to the UE 110 a random access response, the random access response including an indication of one or multiple RAR PDSCHs. At 303, the UE 110 transmits to the gNB 170 an RRC setup/resume request. At 304, the gNB 170 transmits to the UE 110 an RRC setup/resume message. At 305, the UE 110 transmits to the gNB 170 an RRC setup/resume complete message.

FIG. 3B is a signaling diagram 375 showing multiple RARs where the PDCCH indicates the presence of one or more secondary RARs. At 300, related to the redcap UE 110 and the gNB 170, Redcap UEs are supported but early UE identification using MSG1 / MSGA is not supported. At 301, the UE 110 transmits a RACH preamble to the gNB 170. At 302-1, the gNB 170 transmits to the UE 110 a first random access response where the PDCCH indicates the presence of a subsequent RAR. At 302-2, the gNB 170 transmits to the UE 110 a second random access response 302-2. At 303, the UE 110 transmits to the gNB 170 an RRC setup/resume request. At 304, the gNB 170 transmits to the UE 110 an RRC setup/resume message. At 305, the UE 110 transmits to the gNB 170 an RRC setup/resume complete message.

The examples described herein have several advantages and technical effects. The examples described herein avoid RA resources partitions that might be needed to early identify redcap release 18 UEs before MSG2/RAR scheduling. The examples described herein may allow the NW to use the same RARs for all UEs with different BW capabilities when it may not afford scheduling all UEs within the less BW limitation (within the 5MHz BW) and flexibly allocate further RARs for R18 RedCap UEs Also, the NW is not required to always provide a dedicated RACH partition for R18 RedCap UEs, hence R18 RedCap UEs with only a 5MHz BW capability may use the same RACH resources as the earlier release UEs. The examples described herein may also be subject to standardization, such as TS 38.321 and 38.331.

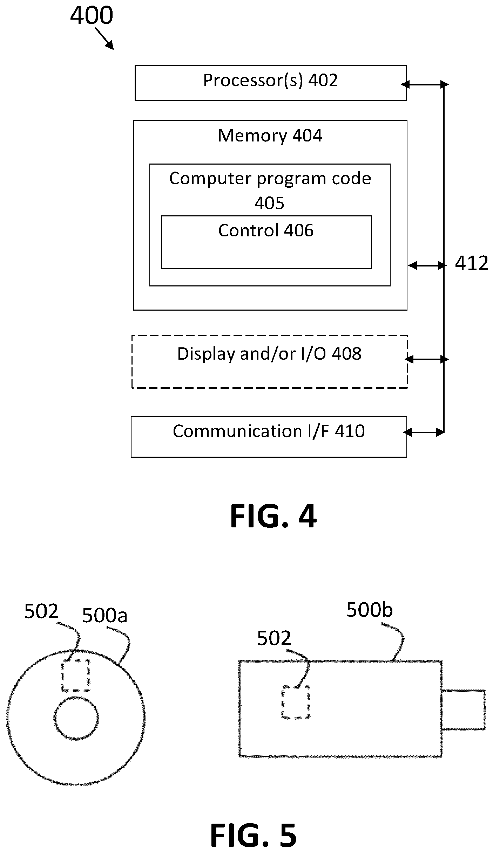

FIG. 4 is an example apparatus 400, which may be implemented in hardware, configured to implement the examples described herein. The apparatus 400 includes at least one processor 402 (e.g. an FPGA and/or CPU), at least one memory 404 including computer program code 405, wherein the at least one memory 404 and the computer program code 405 are configured to, with the at least one processor 402, cause the apparatus 400 to implement circuitry, a process, component, module, or function (collectively control 406) to implement the examples described herein, including multiple random access responses. The memory 404 may be a non-transitory memory, a transitory memory, a volatile memory (e.g. RAM), or a non-volatile memory (e.g. ROM).

The apparatus 400 optionally includes a display and/or I/O interface 408 that may be used to display aspects or a status of the methods described herein (e.g., as one of the methods is being performed or at a subsequent time), or to receive input from a user such as with using a keypad, camera, touchscreen, touch area, microphone, biometric recognition, one or more sensors, etc. The apparatus 400 includes one or more communication e.g. network (N/W) interfaces (I/F(s)) 410. The communication I/F(s) 410 may be wired and/or wireless and communicate over the Internet/other network(s) via any communication technique. The communication I/F(s) 410 may include one or more transmitters and one or more receivers. The communication I/F(s) 410 may include standard well-known components such as an amplifier, filter, frequency-converter, (de)modulator, and encoder/decoder circuitries and one or more antennas.

The apparatus 400 to implement the functionality of control 406 may be UE 110, RAN node 170 (e.g. gNB), or network element(s) 190. Thus, processor 402 may correspond to processor(s) 120, processor(s) 152 and/or processor(s) 175, memory 404 may correspond to memory(ies) 125, memory(ies) 155 and/or memory(ies) 171, computer program code 405 may correspond to computer program code 123, module 140-1, module 140-2, and/or computer program code 153, module 150-1, module 150-2, and/or computer program code 173, and communication I/F(s) 410 may correspond to transceiver 130, antenna(s) 128, transceiver 160, antenna(s) 158, N/W I/F(s) 161, and/or N/W I/F(s) 180. Alternatively, apparatus 400 may not correspond to either of UE 110, RAN node 170, or network element(s) 190, as apparatus 400 may be part of a self-organizing/optimizing network (SON) node, such as in a cloud.

The apparatus 400 may also be distributed throughout the network (e.g. 100) including within and between apparatus 400 and any network element (such as a network control element (NCE) 190 and/or the RAN node 170 and/or the UE 110).

Interface 412 enables data communication between the various items of apparatus 400, as shown in FIG. 4. For example, the interface 412 may be one or more buses such as address, data, or control buses, and may include any interconnection mechanism, such as a series of lines on a motherboard or integrated circuit, fiber optics or other optical communication equipment, and the like. Computer program code 405, including control 406 may include object-oriented software configured to pass data or messages between objects within computer program code 405. The apparatus 400 need not include each of the features mentioned, or may include other features as well.

FIG. 5 shows a schematic representation of non-volatile memory media 500a (e.g. computer disc (CD) or digital versatile disc (DVD)) and 500b (e.g. universal serial bus (USB) memory stick) storing instructions and/or parameters 502 which when executed by a processor allows the processor to perform one or more of the steps of the methods described herein.

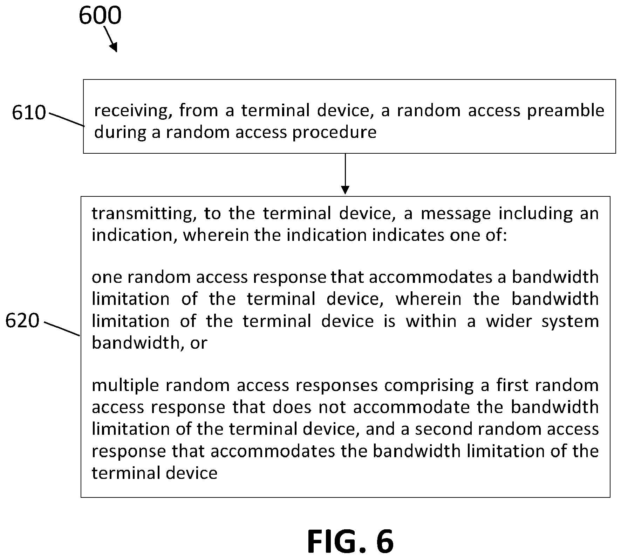

FIG. 6 is an example method 600 performed by a network node, to implement the example embodiments described herein. At 610, the method includes receiving, from a terminal device, a random access preamble during a random access procedure. At 620, the method includes transmitting, to the terminal device, a message (e.g. carried over a physical downlink control channel during the random access procedure) including an indication, wherein the indication indicates one of: one random access response that accommodates a bandwidth limitation of the terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device. Method 600 may be implemented with RAN node 170.

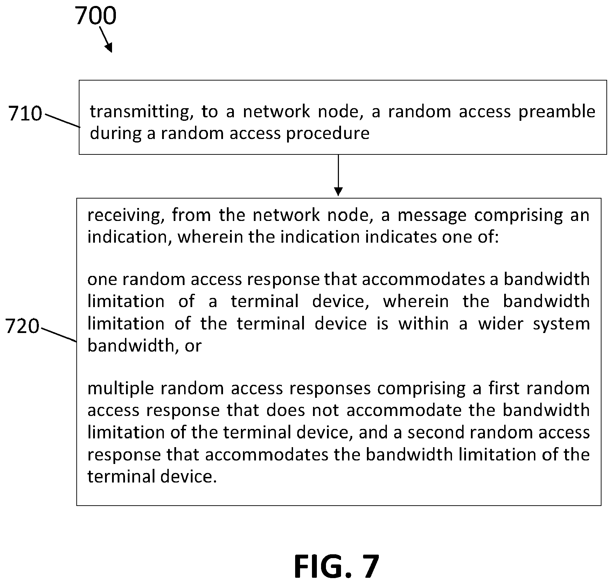

FIG. 7 is an example method 700 performed by a terminal device, to implement the example embodiments described herein. At 710, the method includes transmitting, to a network node, a random access preamble during a random access procedure. At 720, the method includes receiving, from the network node, a message (e.g. carried over a physical downlink control channel during the random access procedure) including an indication, wherein the indication indicates one of: one random access response that accommodates a bandwidth limitation of a terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device. Method 700 may be implemented with UE 110.

The following examples are described and provided herein.

Example 1. An apparatus (e.g., a network node) including: at least one processor; and at least one memory storing instructions that, when executed by the at least one processor, cause the apparatus at least to: receive, from a terminal device, a random access preamble during a random access procedure; and transmit, to the terminal device, a message including an indication, wherein the indication indicates one of: one random access response that accommodates a bandwidth limitation of the terminal device, wherein the bandwidth limitation of the terminal device being within a wider system bandwidth, or multiple random access responses including a first random access response that does not accommodate the bandwidth limitation of the terminal device, and a second random access response that accommodates the bandwidth limitation of the terminal device.

Example 2. The apparatus of example 1, wherein the message may be carried over a physical downlink control channel.

Example 3. The apparatus of example 1, wherein: the one random access response that accommodates the bandwidth limitation of the terminal device is provided with one resource assignment which is indicated to be decoded by the terminal device; and the second random access response is provided with a same one resource assignment which is indicated to be decoded by the terminal device.

Example 4. The apparatus of example 3, wherein the one resource assignment to accommodate the bandwidth limitation of the terminal device is a portion of an entire resource assignment provided in the one random access response to accommodate the wider system bandwidth.

In addition to the Example, the second random access response that accommodates the bandwidth limitation of the terminal device is provided with the one resource assignment is indicated to be decoded by the terminal device, wherein the one resource assignment is distinct of the entire resource assignment that does not accommodate the bandwidth imitation of the terminal device

Example 5. The apparatus of examples 3 to 4, wherein the resource assignment for the one random access response includes resources for a physical downlink shared channel.

Example 6. The apparatus of example 1, wherein the instructions, when executed by the at least one processor, cause the apparatus at least to: transmit, to the terminal device, the second random access response that accommodates the bandwidth limitation of the terminal device subsequent to transmitting the first random access response that does not accommodate the bandwidth limitation of the terminal device.

Example 7. The apparatus of example 1, wherein the first random access response includes a resource assignment that does not accommodate the bandwidth limitation of the terminal device, and the second random access response includes a resource assignment that accommodates the bandwidth limitation of the terminal device.

Example 8. The apparatus of example 7, wherein the resource assignment of the first random access response includes a physical downlink shared channel, and the resource assignment of the second random access response includes a physical downlink shared channel.

Example 9. The apparatus of example 1, wherein the instructions, when executed by the at least one processor, cause the apparatus at least to: transmit, to a random access radio network temporary identifier associated with the terminal device, both the first random access response that does not accommodate the bandwidth limitation of the terminal device, and the second random access response that accommodates the bandwidth limitation of the terminal device.

Example 10. The apparatus of example 9, wherein the first random access response includes a resource assignment that does not accommodate the bandwidth limitation of the terminal device, and the second random access response includes a resource assignment that does accommodates the bandwidth limitation of the terminal device.

Example 11. The apparatus of example 1, wherein the bandwidth limitation of the terminal device may be less than or equal to 5 megahertz, and the system bandwidth may be greater than 5 megahertz.

Example 12. The apparatus of example 1, wherein the system bandwidth may be at least 20 megahertz, and the bandwidth limitation of the terminal device may be less than 20 megahertz.

Example 13. The apparatus of example 1, wherein the indication may be provided explicitly with 1 bit.

Example 14. The apparatus of example 3, wherein the indication is provided implicitly by the one resource assignment to accommodate the bandwidth limitation of the terminal device.

Example 15. The apparatus of example 3, wherein the indication is provided implicitly by the one resource assignment to not accommodate the bandwidth limitation of the terminal device.

Example 16. An apparatus (e.g., a terminal device) including: at least one processor; and at least one memory storing instructions that, when executed by the at least one processor, cause the apparatus at least to: transmit, to a network node, a random access preamble during a random access procedure; and receive, from the network node, a message including an indication, wherein the indication indicates one of: one random access response that accommodates a bandwidth limitation of a terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device.

Example 17. The apparatus of example 16, wherein the message is carried over a physical downlink control channel.

Example 18. The apparatus of example 16, wherein: the one random access response that accommodates the bandwidth limitation of the terminal device is provided with one resource assignment which is indicated to be decoded by the terminal device; and the second random access response is provided with a same one resource assignment which is indicated to be decoded by the terminal device.

Example 19. The apparatus of example 18, wherein the one resource assignment to accommodate the bandwidth limitation of the terminal device is a portion of an entire resource assignment provided in the one random access response to accommodate the wider system bandwidth.

In addition to the Example 19, the second random access response that accommodates the bandwidth limitation of the terminal device is provided with the one resource assignment is indicated to be decoded by the terminal device, wherein the one resource assignment is distinct of the entire resource assignment that does not accommodate the bandwidth imitation of the terminal device.

Example 20. The apparatus of examples 18 to 19, wherein the resource assignment for the one random access response includes resources for a physical downlink shared channel.

Example 21. The apparatus of example 16, wherein the instructions, when executed by the at least one processor, cause the apparatus at least to: receive, from the network node, the second random access response that accommodates the bandwidth limitation of the terminal device subsequent to the first random access response that does not accommodate the bandwidth limitation of the terminal device.

Example 22. The apparatus of example 16 or example 21, wherein the terminal device is caused to, based on information received from the network node or based on another determination, ignore or skip the first random access response, and monitor signaling for the second random access response that is subsequently scheduled.

Example 23. The apparatus of example 16, wherein the first random access response includes a resource assignment that does not accommodate the bandwidth limitation of the terminal device, and the second random access response includes a resource assignment that accommodates the bandwidth limitation of the terminal device.

Example 24. The apparatus of example 23, wherein the instructions, when executed by the at least one processor, cause the apparatus at least to: decode the resource assignment of the second random access response that accommodates the bandwidth limitation of the terminal device.

Example 25. The apparatus of example 23, wherein the resource assignment of the first random access response includes a physical downlink shared channel, and the resource assignment of the second random access response includes a physical downlink shared channel.

Example 26. The apparatus of example 16, wherein the apparatus includes the terminal device.

Example 27. The apparatus of example 16, wherein the instructions, when executed by the at least one processor, cause the apparatus at least to: receive, with a random access radio network temporary identifier associated with the terminal device, both the first random access response that does not accommodate the bandwidth limitation of the terminal device, and the second random access response that accommodates the bandwidth limitation of the terminal device.

Example 28. The apparatus of example 27, wherein the instructions, when executed by the at least one processor, cause the apparatus at least to: decode a resource assignment of the second random access response that accommodates the bandwidth limitation of the terminal device.

Example 29. The apparatus of example 28, wherein the resource assignment includes a physical downlink shared channel.

Example 30. The apparatus of example 16, wherein the bandwidth limitation of the terminal device may be less than or equal to 5 megahertz, and the system bandwidth may be greater than 5 megahertz.

Example 31. The apparatus of example 16, wherein the system bandwidth may be at least 20 megahertz, and the bandwidth limitation of the terminal device may be less than 20 megahertz.

Example 32. The apparatus of example 16, wherein the indication may be provided explicitly with 1 bit.

Example 33. The apparatus of example 18, wherein the indication is provided implicitly by the one resource assignment to accommodate the bandwidth limitation of the terminal device.

Example 34. The apparatus of example 18, wherein the indication is provided implicitly by the one resource assignment to not accommodate the bandwidth limitation of the terminal device.

Example 3 5. A method performed by a network node, including: receiving, from a terminal device, a random access preamble during a random access procedure; and transmitting, to the terminal device, a message including an indication, wherein the indication indicates one of: one random access response that accommodates a bandwidth limitation of the terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device.

Example 36. A method performed by a terminal device, including: transmitting, to a network node, a random access preamble during a random access procedure; and receiving, from the network node, a message including an indication, wherein the indication indicates one of: one random access response that accommodates a bandwidth limitation of a terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device.

Example 37. An apparatus (e.g., a network node) including: means for receiving, from a terminal device, a random access preamble during a random access procedure; and means for transmitting, to the terminal device, a message including an indication, wherein the indication indicates one of: one random access response that accommodates a bandwidth limitation of the terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device.

Example 38. An apparatus (e.g., a terminal device) including: means for transmitting, to a network node, a random access preamble during a random access procedure; and means for receiving, from the network node, a message including an indication, wherein the indication indicates one of: one random access response that accommodates a bandwidth limitation of a terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device.

Example 39. A non-transitory program storage device readable by a machine, tangibly embodying a program of instructions executable with the machine for performing operations, the operations including: receiving, from a terminal device, a random access preamble during a random access procedure; and transmitting, to the terminal device, a message including an indication, wherein the indication indicates one of: one random access response that accommodates a bandwidth limitation of the terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device.

Example 40. A non-transitory program storage device readable by a machine, tangibly embodying a program of instructions executable with the machine for performing operations, the operations including: transmitting, to a network node, a random access preamble during a random access procedure; and receiving, from the network node, a message including an indication, wherein the indication indicates one of: one random access response that accommodates a bandwidth limitation of a terminal device, wherein the bandwidth limitation of the terminal device is within a wider system bandwidth, or multiple random access responses including a first random access response that does not accommodate the bandwidth limitation of the terminal device, and a second random access response that accommodates the bandwidth limitation of the terminal device.

References to a 'computer', 'processor', etc. should be understood to encompass not only computers having different architectures such as single/multi-processor architectures and sequential or parallel architectures but also specialized circuits such as field-programmable gate arrays (FPGAs), application specific circuits (ASICs), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The memory(ies) as described herein may be implemented using any suitable data storage technology, such as semiconductor based memory devices, flash memory, magnetic memory devices and systems, optical memory devices and systems, non-transitory memory, transitory memory, fixed memory and removable memory. The memory(ies) may include a database for storing data.

As used herein, the term 'circuitry' may refer to the following: (a) hardware circuit implementations, such as implementations in analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. As a further example, as used herein, the term 'circuitry' may also cover an implementation of merely a processor (or multiple processors) or a portion of a processor and its (or their) accompanying software and/or firmware. The term 'circuitry' may also cover, for example and if applicable to the particular element, a baseband integrated circuit or applications processor integrated circuit for a mobile phone or a similar integrated circuit in a server, a cellular network device, or another network device.

In the figures, arrows between individual blocks represent operational couplings there-between as well as the direction of data flows on those couplings.

It should be understood that the foregoing description is only illustrative. Various alternatives and modifications may be devised by those skilled in the art. For example, features recited in the various dependent claims may be combined with each other in any suitable combination(s). In addition, features from different example embodiments described above may be selectively combined into a new example embodiment. Accordingly, this description is intended to embrace all such alternatives, modifications and variances which fall within the scope of the appended claims.

The following acronyms and abbreviations that may be found in the specification and/or the drawing figures are defined as follows (the abbreviations and acronyms may be appended with each other or with other characters using e.g. a dash, hyphen, or number):
- 3GPP: third generation partnership project
- 4G: fourth generation
- 5G: fifth generation
- 5GC: 5G core network
- AMF: access and mobility management function
- ASIC: application-specific integrated circuit
- BB: broadband
- BW: bandwidth
- BWP: bandwidth part
- CCCH: common control channel
- CORESET: control resource set
- CPU: central processing unit
- CRC: cyclic redundancy check
- CSI: channel state information
- CU: central unit or centralized unit
- DCI: downlink control information
- DL: downlink
- DSP: digital signal processor
- eNB: evolved Node B (e.g., an LTE base station)
- EN-DC: E-UTRAN new radio - dual connectivity
- en-gNB: node providing NR user plane and control plane protocol terminations towards the UE, and acting as a secondary node in EN-DC
- E-UTRA: evolved universal terrestrial radio access, i.e., the LTE radio access technology
- E-UTRAN: E-UTRA network
- F1: interface between the CU and the DU
- FPGA: field-programmable gate array
- FR: frequency range
- gNB: base station for 5G/NR, i.e., a node providing NR user plane and control plane protocol terminations towards the UE, and connected via the NG interface to the 5GC
- IAB: integrated access and backhaul
- I/F: interface
- I/O: input/output
- L1: layer 1
- LCID: logical channel identifier
- LMF: location management function
- LSB: least significant bit
- LTE: long term evolution (4G)
- MAC: medium access control
- MME: mobility management entity
- MRO: mobility robustness optimization
- MSG1: message 1 in a 4-step random access procedure
- MSG3 or Msg3: message 3 in a 4-step random access procedure
- MSGA: message a in a 2-step random access procedure
- MsgB: message b in a 2-step random access procedure
- NCE: network control element
- ng or NG: new generation
- ng-eNB: new generation eNB
- NG-RAN: new generation radio access network
- NR: new radio (5G)
- NW or N/W: network
- PDA: personal digital assistant
- PDCCH: physical downlink control channel
- PDCP: packet data convergence protocol
- PDSCH: physical downlink shared channel
- PHY: physical layer
- PRACH: physical random access channel
- PRB: physical resource block
- PUCCH: physical uplink control channel
- PUSCH: physical uplink shared channel
- R: release
- RA or ra: random access
- RACH: random access channel
- RAM: random access memory
- RAN: radio access network
- RAN1: radio layer 1
- RAR: random access response
- RB: resource block
- RedCap and variants: reduced capabilities
- Rel-: release
- RF: radio frequency
- RLC: radio link control
- RNTI: radio network temporary identifier
- RO: RACH occasion
- ROM: read-only memory
- RP-: RAN meeting
- RRC: radio resource control (protocol)
- RU: radio unit
- Rx: receiver or reception
- SCS: subcarrier spacing
- SFN: system frame number
- SGW: serving gateway
- SI: study item
- SMF: session management function
- SON: self-organizing/optimizing network
- SSB: synchronization signal block
- TB: transport block
- TR: technical report
- TRP: transmission reception point
- TS: technical specification
- Tx: transmitter or transmission
- UAV: unmanned aerial vehicle
- UE: user equipment (e.g., a wireless, typically mobile device)
- UL: uplink
- UPF: user plane function
- VRB: virtual resource block
- WI: work item
- X2: network interface between RAN nodes and between RAN and the core network
- Xn: network interface between NG-RAN nodes

## Claims

1. An apparatus comprising:
means for receiving, from a terminal device, a random access preamble during a random access procedure; and
means for transmitting, to the terminal device, a message including an indication, wherein the indication indicates one of:
one random access response that accommodates a bandwidth limitation of the terminal device, wherein the bandwidth limitation of the terminal device being within a wider system bandwidth, or
multiple random access responses comprising a first random access response that does not accommodate the bandwidth limitation of the terminal device, and a second random access response that accommodates the bandwidth limitation of the terminal device.

2. The apparatus of claim 1, wherein the message is carried over a physical downlink control channel.

3. The apparatus of claim 1, wherein:
the one random access response that accommodates the bandwidth limitation of the terminal device is provided with one resource assignment which is distinct of the resource assignment that does not accommodate BW limitation and is indicated to be decoded by the terminal device.

4. The apparatus of claim 3, wherein the one resource assignment to accommodate the bandwidth limitation of the terminal device is a portion of an entire resource assignment that accommodate the wider system bandwidth.

5. The apparatus of claim 4, wherein the second random access response that accommodates the bandwidth limitation of the terminal device is provided with the one resource assignment is indicated to be decoded by the terminal device, wherein the one resource assignment is distinct of the entire resource assignment that does not accommodate the bandwidth imitation of the terminal device.

6. The apparatus of claims 3-4, wherein the resource assignment for the one random access response comprises resources for a physical downlink shared channel.

7. The apparatus of claim 1, wherein the apparatus is caused to perform:
transmitting, to the terminal device, the second random access response that accommodates the bandwidth limitation of the terminal device subsequent to transmitting the first random access response that does not accommodate the bandwidth limitation of the terminal device.

8. The apparatus of claim 1, wherein the first random access response comprises a resource assignment that does not accommodate the bandwidth limitation of the terminal device, and the second random access response comprises a resource assignment that accommodates the bandwidth limitation of the terminal device.

9. The apparatus of claim 7, wherein the resource assignment of the first random access response comprises a physical downlink shared channel, and the resource assignment of the second random access response comprises a physical downlink shared channel.

10. The apparatus of claim 1, wherein the apparatus is caused to perform:
transmitting, to a random access radio network temporary identifier associated with the terminal device, both the first random access response that does not accommodate the bandwidth limitation of the terminal device, and the second random access response that accommodates the bandwidth limitation of the terminal device.

11. The apparatus of claim 10, wherein the first random access response comprises a resource assignment that does not accommodate the bandwidth limitation of the terminal device, and the second random access response comprises a resource assignment that does accommodates the bandwidth limitation of the terminal device.

12. The apparatus of claim 1, wherein the indication is provided explicitly with 1 bit.

13. The apparatus of claim 3, wherein the indication is provided implicitly by the one resource assignment to accommodate the bandwidth limitation of the terminal device.

14. The apparatus of claim 3, wherein the indication is provided implicitly by the one resource assignment that does not accommodate the bandwidth limitation of the terminal device.

15. An apparatus comprising:
means for transmitting, to a network node, a random access preamble during a random access procedure; and
means for receiving, from the network node, a message comprising an indication, wherein the indication indicates one of:
one random access response that accommodates a bandwidth limitation of a terminal device, wherein the bandwidth limitation of the terminal device is within a wider system bandwidth, or
multiple random access responses comprising a first random access response that does not accommodate the bandwidth limitation of the terminal device, and a second random access response that accommodates the bandwidth limitation of the terminal device.
